# EUROPÄISCHE PATENTANMELDUNG

(11) **EP 0 563 808 A1**
(43) Veröffentlichungstag der Anmeldung: **06.10.1993**
(21) Anmeldenummer: 93104994.4
(22) Anmeldetag: 26.03.1993
(51) Int. Cl.: B65D 25/16, B65D 43/02, B65D 25/32

(54) **Behälter und Nachfülleinheit für Flüssigheiten, insbesondere Farbe oder Leim**

(30) Priorität: 30.03.1992 CH 1005/92
(71) Anmelder: D & A DIEGO BALLY DESIGN & ADVERTISING AG, CH-8006 Zürich (CH)
(72) Erfinder: Bally, Diego, CH-8702 Zollikon (CH)
(74) Vertreter: Blum, Rudolf Emil Ernst

(57) **Zusammenfassung**

Das Nachfüllgebinde für flüssige Güter besitzt einen Innenbehälter (4) aus einer dünnen Kunststoff-Folie. An deren Aussenseite ist als Stabilisierungsstruktur eine Karton-Banderole (1) mit einem Bodenteil (2) und einer Abdeckung (3) aus Wellkarton vorgesehen. Der obere Rand (5) des Innenbehälters überlappt die Banderole (1). Abschnitte dieses Randes (5) sind als Tragschlaufen für das Nachfüllgebinde ausgestaltet. Damit können die Stabilisierungsstrukturen für Transport und Lagerungen erfüllt werden. Beim Verbraucher wird das Nachfüllgebinde in einen stabilen Arbeitsbehälter (10) eingesetzt, der wiederverwendbar ist oder direkt als Gebrauchsbehälter verwendet werden kann.

## Beschreibung

Die Erfindung betrifft ein Nachfüllgebinde für flüssige Güter, wie z.B. Farbe oder Leim.

Solche Güter werden bisher den Abnehmern in Arbeitsbehältern geliefert, aus denen sie zur Verarbeitung entnehmbar sind und beim Abnehmer gelagert werden. Solche Arbeitsbehälter sind als stabile, wiederverschliessbare Kunststoff-Kessel ausgebildet, die auf Baustellen und Werkplätzen einsetzbar sind und den dort herrschenden, harten Bedingungen widerstehen. Die verschmutzten, leeren Arbeitsbehälter wandern regelmässig in den Bauabfall und tragen beträchtlich zur Abfallmenge bei.

Es stellt sich auf diesem Hintergrund die Aufgabe, ein Nachfüllgebinde zu schaffen, das den Anforderungen bei Lagerung und Transport zum Abnehmer genügt und erst beim Abnehmer in einen Arbeitsbehälter einsetzbar ist, so dass der Arbeitsbehälter wiederverwendbar ist.

Diese Aufgabe wird durch ein Nachfüllgebinde mit den in den Patentansprüchen genannten Merkmalen gelöst.

Beim erfindungsgemässen Nachfüllgebinde erlaubt die Stabilisierungsstruktur eine Minimierung des Kunststoffanteils sowie eine getrennte Entsorgung von unproblematischen und mit Füllgutresten kontaminierten Teilen. Ein Innenbehälter aus einer dünnen Kunststoff-Folie, an welchem Traggriffe für den manuellen Transport der Nachfüllgebinde ausgebildet sind, dient als Einsatz in die herkömmlichen Arbeitsbehälter. Der Arbeitsbehälter wird damit sauber gehalten und lässt sich beliebig oft wiederverwenden. Andererseits kann die Verarbeitung des Füllguts auch direkt aus dem Nachfüllgebinde erfolgen. Damit kann sowohl der Transport wie auch die Verarbeitung des Gutes weiterhin auf herkömmliche Weise erfolgen, wobei jedoch wesentlich weniger an problematischem Abfall anfällt.

Weitere Vorteile und Eigenschaften des erfindungsgemässen Nachfüllgebindes ergeben sich aus der nachfolgenden Beschreibung eines Ausführungsbeispiels anhand der Figuren.

Darin zeigen:
Figur 1 ein Nachfüllgebinde im Schnitt, wobei rechts der Zustand des Gebindes bei Transport und Lagerung und links das in einem Arbeitsbehälter eingesetzte Gebinde dargestellt ist;
Figur 2 eine Seitenansicht des Nachfüllgebindes im Transportzustand;
Figur 3 eine Detailansicht aus Figur 1, entlang einer Schnittlinie III - III in Fig. 5 zur Illustration des Einsetzens des Nachfüllgebindes in einen Arbeitsbehälter;
Figur 4 eine Detailansicht gemäss Figur 1 des Nachfüllgebindes im Transportzustand;
Figur 5 eine Aufsicht auf das Nachfüllgebinde bei entferntem Kartondeckel, wobei links eine Ansicht in verschlossenem Zustand und rechts oben eine Ansicht in geöffnetem Zustand gezeigt ist, und
Figur 6 den Kartondeckel in Aufsicht.

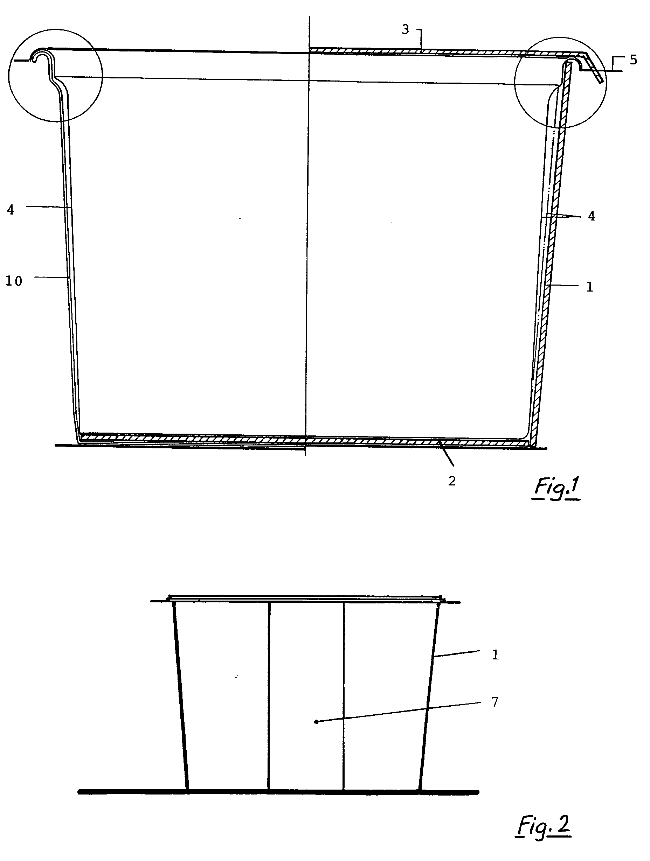

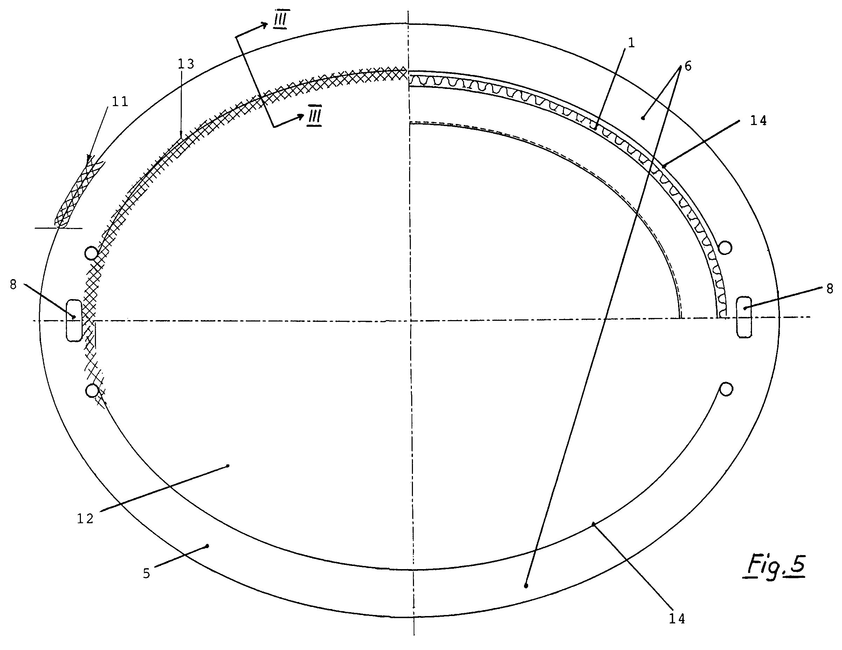

Das Nachfüllgebinde besitzt in seinem Transport- und Lagerzustand, wie er in der rechten Hälfte von Fig. 1, in Fig. 2 sowie in Fig. 4 dargestellt ist, eine äussere Stabilisierungsstruktur, bestehend aus einer Banderole 1, einem Boden 2 und einer Abdeckung 3 aus Wellkarton. Die Banderole läuft nach unten konisch zusammen. Sie ist aus einwelligem, einseitig cachiertem Wellkarton gefertigt, bei dem die Wellen vorzugsweise nach innen gekehrt sind. Ein ebenfalls konisch geformter Innenbehälter 4 aus einer Kunststoff-Folie sitzt in der Banderole 1. Der Boden 2 der Tragstruktur besteht vorzugsweise aus beidseitig cachiertem Wellkarton und ist am Boden des Innenbehälters befestigt, z.B. wieder trennbar angeklebt. Die Abdeckung 3 übersteht die Banderole 1 in Radialrichtung. Diese äussere Stabilisierungsstruktur gibt dem Gebilde die nötige Steifigkeit. Insbesondere können die Gebinde gestapelt werden, wobei die Gewichtskräfte ohne Belastung des Innenbehälters 4 über die Abdeckung 3 und die Banderole 1 auf die Auflagefläche übertragen werden und keine Gefahr besteht, dass der Innenbehälter platzt. Für den Transport mittels am Innenbehälter ausgebildeter Tragschlaufen gilt dasselbe, indem die Kräfte der Tragschlaufen mindestens teilweise von der äusseren Stabilisierungsstruktur aufgenommen werden, wie noch näher erläutert wird.

Der Innenbehälter 4 besteht vorzugsweise aus einer tiefgezogenen Kunststoff-Folie, vorzugsweise aus A-PET oder aus A-PET-Verbund mit PE oder PP, und ist innen peelbeschichtet. Er weist einen oberen Rand auf, der die Banderole 1 radial überlappt, wie insbesondere auch der Fig. 4 (oben rechts) zu entnehmen ist. Die Ueberlappung 5 des Innenbehälters 4 hat mehrere Funktionen. Einerseits bilden zwei einander gegenüber liegende Stellen 6 der Ueberlappung Tragschlaufen, die nach oben zusammengeschwenkt und mit einer Hand gefasst werden können (vergl. Fig. 5). Die beiden Tragschlaufen 6 sind an insgesamt vier Angriffspunkten mit dem Innenbehälter verbunden. Die Tragkräfte verteilen sich damit auf vier Stellen entlang des Umfangs und die Horizontalkomponenten der Kräfte werden von der Stabilisierungsstruktur aufgenommen, so dass eine zu starke Deformation des Gebindes vermieden wird. Die Tragschlaufen 6 dienen zum manuellen Transport der Nachfüllgebinde sowie zum Einsetzen derselben in die Arbeitsbehälter, nachdem die Banderole 1 entfernt worden ist.

Wie aus Figur 2 entnehmbar ist, sind die Wellen des einwelligen, einseitig cachierten Wellkartons der Banderole 1 vorzugsweise nach innen gerichtet. Im seitlichen Bereich der Banderole zwischen den Angriffsstellen der Tragschlaufen 6 kann auf der Wellenseite der Banderole je ein Verstärkungspapier 7 aufgeklebt sein, das horizontale Zugkräfte aufzunehmen hilft und damit der Deformation des Gebindes beim Tragen weiter entgegenwirkt. Die Verstärkungspapiere 7 ergeben gleichzeitig ebene Flächen, die mit Markennamen und Produkte-Informationen bedruckt sein können.

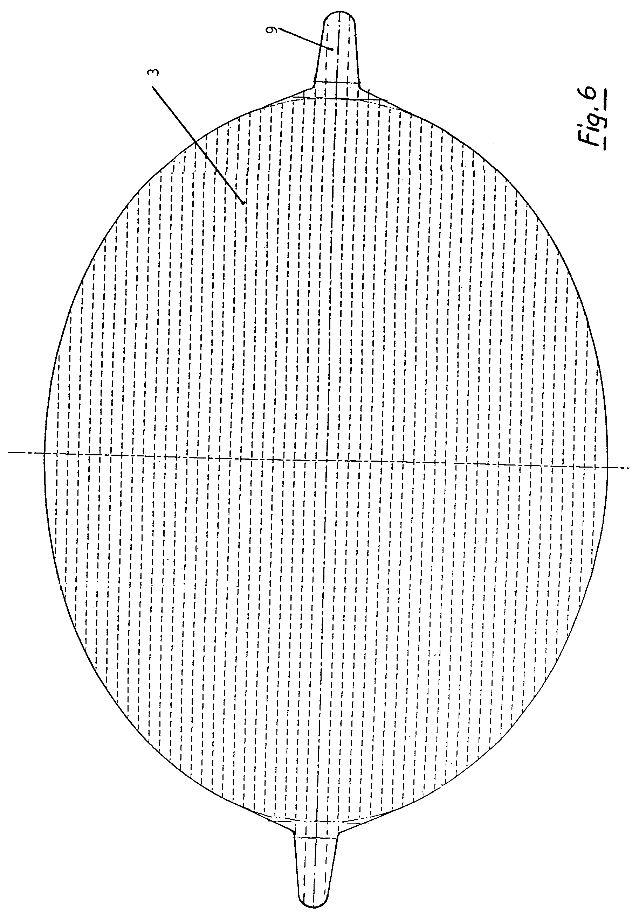

Eine weitere Funktion der radialen Ueberlappung 5 des Innenbehälters 4 besteht in der Fixierung der Abdeckung 3. Beidseitig sind in der Ueberlappung Oeffnungen 8 angeordnet, in welche Zungen 9 der Abdeckung 3 einsteckbar sind (vergl. Fig. 4, 5 und 6). Damit ist die Abdeckung auf dem Gebinde positioniert und für den Transport und die Lagerung fixiert. Zum Oeffnen des Nachfüllgebindes ist sie leicht entfernbar und wieder auf das Nachfüllgebinde aufsetzbar.

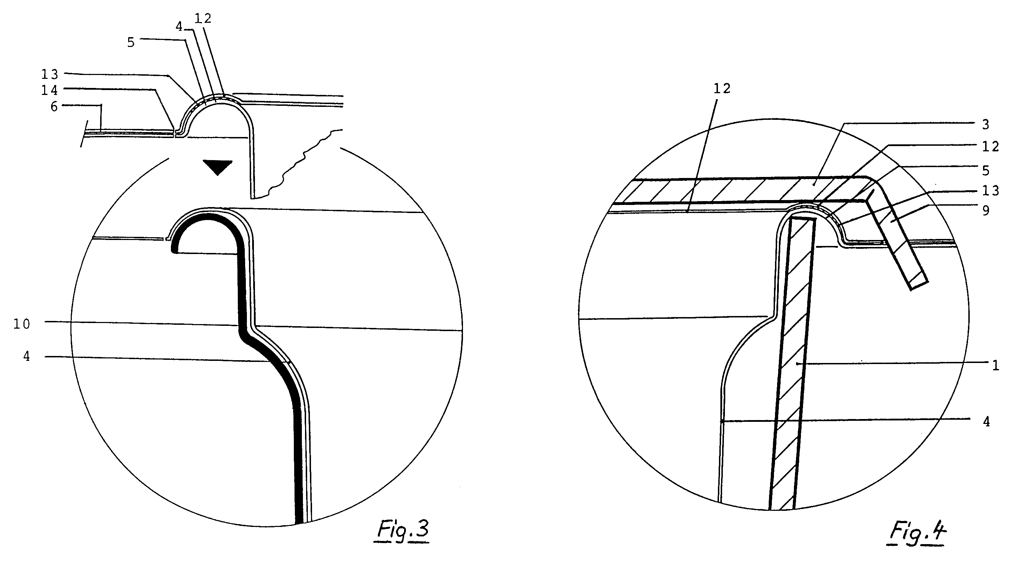

Schliesslich ist die radiale Ueberlappung 5 des Innenbehälters 4 so ausgestaltet, dass sie an den Rand 11 eines Arbeitsbehälters 10 angepasst ist (vergl. Fig. 1 linke Seite und Fig. 3) und diesen übergreift. Damit wird vermieden, dass das Gut bei der Verarbeitung zwischen den Innenbehälter 4 und dem Arbeitsbehälter 10 gelangt. Zugleich erlaubt es diese Ausgestaltung, einen den Rand übergreifenden Schnappdeckel herkömmlicher Art (nicht gezeigt) auf den Arbeitsbehälter 10 aufzusetzen und diesen luftdicht zu verschliessen. Dabei kann der Rand des Arbeitsbehälters 10 vom Deckel fast über den ganzen Umfang übergriffen werden, so dass er fest auf dem Arbeitsbehälter sitzt.

Im Transport- und Lagerzustand ist der Innenbehälter 4 des Nachfüllgebindes mit einer Verschlussfolie 12 luftdicht abgeschlossen. Die Verschlussfolie 12 ist mit der Ueberlappung 5 des Innenbehälters 4 verschweisst und zwar einerseits längs einer inneren, durchgehenden Schweissnaht 13 und anderseits an einer Schweissnaht 11 aussen an den Tragschlaufen 6 (vergl. Fig. 3, 4 und 5). Die Verschlussfolie 12 kann nach dem Abnehmen der schützenden Abdeckung 3 abgezogen werden, wozu die Verschlussfolie 12 und/oder der Innenbehälter 4 peelbeschichtet ist. In Fig. 3 ist oben der Zustand mit noch vorhandener Verschlussfolie 12 und unten der Zustand bei abgezogener Verschlussfolie 12 gezeigt.

Die Herstellung des beschriebenen Nachfüllgebindes kann wie folgt geschehen. Zunächst wird der Innenbehälter 4 durch Tiefziehen aus einer Kunststoff-Folie geformt und aussen an dessen Boden der Wellkarton-Boden 2 fixiert. In diesem Zustand erfolgt die Abfüllung, wonach die Verschlussfolie 12 aufgelegt und angeschweisst wird. Danach werden die radialen Ueberlappungen 5 des Innenbehälters längs ihrem Umfang und gleichzeitig die Tragschlaufen-Aussparungen 14 ausgestanzt.

Der Innenbehälter 4 wird dann in die vorfabrizierte Banderole 1 eingesetzt und die Abdeckung 3 wird aufgesteckt. In diesem Zustand werden die Nachfüllgebinde palettiert und versandt. Die Nachfüllgebinde können dabei gestapelt werden.

Zur Verarbeitung des Füllguts ergeben sich zwei Möglichkeiten. Einerseits kann die Verarbeitung direkt aus dem Nachfüllgebinde erfolgen, welches hierzu ausreichend stabil ist. Andererseits können die herkömmlichen Arbeitsbehälter verwendet werden, in die das Nachfüllgebinde einsetzbar ist.

Der Empfänger hebt dazu den Innenbehälter 4 zum Gebrauch an den Tragschlaufen aus der Banderole 1 und setzt ihn in den Arbeitsbehälter 10 ein (Fig. 3). Vor der Verarbeitung entfernt er die Abdeckung 3 und die Verschlussfolie 12. Bei Arbeitsunterbrüchen kann einerseits die Abdeckung 3 oder zum Wiederverschliessen der Deckel des Arbeitsbehälters verwendet werden. Ist das Gut aufgebraucht, wird der Innenbehälter 4 aus dem Arbeitsbehälter 10 oder bei direkter Verwendung aus der Banderole herausgehoben und getrennt entsorgt. Der Arbeitsbehälter steht zur Wiederverwendung zur Verfügung.

Das Nachfüllgebinde der beschriebenen Art ist besonders geeignet als Behälter für Farben und Leim in Quantitäten, wie sie auf Baustellen oder in Werkstätten verarbeitet werden.

Die beschriebene Stabilisierungsstruktur dient zur Stabilisierung der Form des dünnwandigen Innenbehälters, zur Uebertragung von Kräften ohne Belastung des Innenbehälters und als mechanischer Schutz desselben. Im Rahmen dieser Funktionen können die beschriebenen Elemente abgewandet werden. Insbesondere kann die Banderole 1 und der Boden 2 Durchbrechungen aufweisen, welche zur weiteren Materialersparnis führen.

## Patentansprüche

1. Nachfüll- und Gebrauchsgebinde für flüssige Güter, gekennzeichnet durch einen flüssigkeitsdichten Innenbehälter (4) aus einer Kunststoff-Folie und einer an dessen Aussenseite angeordneten Stabilisierungsstruktur, welche eine stehende, den Behälterumfang umgebende Banderole (1) aufweist, deren oberer Rand vom Innenbehälter (4) radial überlappt wird, wobei mindestens ein Traggriff (6) am Innenbehälter ausgebildet ist.

2. Gebinde nach Anspruch 1, dadurch gekennzeichnet, dass der Innenbehälter (4) und die Banderole (1) nach unten konisch zusammenlaufende Wandungen haben.

3. Gebinde nach einem der vorangehenden Ansprüche, dadurch gekennzeichnet, dass der mindestens eine Traggriff (6) an der radialen Ueberlappung (5) des Innenbehälters ausgebildet ist.

4. Gebinde nach Anspruch 3, dadurch gekennzeichnet, dass die radiale Ueberlappung (5) an gegenüberliegenden Stellen des Behälterumfangs längs einem Teil des Umfangs vom Innenbehälter lösbar sind und die zwei gelösten Ueberlappungsbereiche (6) als Tragschlaufen nach oben zusammenschwenkbar sind.

5. Gebinde nach einem der vorangehenden Ansprüche, dadurch gekennzeichnet, dass der Innenbehälter (4) mit einer wegnehmbaren Verschlussfolie (12) luftdicht verschlossen ist.

6. Gebinde nach einem der vorangehenden Ansprüche, dadurch gekennzeichnet, dass die Stabilisierungsstruktur ferner eine Abdeckung (3) aufweist, die die Banderole (1) mindestens teilweise radial überragt und auf dieser bzw. der radialen Ueberlappung (5) des Innenbehälters (4) aufliegt.

7. Gebinde nach Anspruch 6, dadurch gekennzeichnet, dass der Deckel mittels Steckverbindungen an der radialen Ueberlappung (5) des Innenbehälters positioniert und fixiert ist.

8. Gebinde nach einem der vorangehenden Ansprüche, dadurch gekennzeichnet, dass die Stabilisierungsstruktur einen Boden (2) aufweist, der aussen am Boden des Innenbehälters (4) und innerhalb der Banderole (1) angeordnet ist.

9. Gebinde nach einem der vorangehenden Ansprüche, dadurch gekennzeichnet, dass die Stabilisierungsstruktur (1, 2, 3) aus Kartonteilen besteht.

10. Verwendung des Gebindes nach einem der vorangehenden Ansprüche als Einsatz in einen wiederverwendbaren Arbeitsbehälter.

11. Verwendung des Gebindes nach einem der Ansprüche 1 bis 9 als Einweg-Gebrauchsbehälter.
